# EUROPÄISCHE PATENTANMELDUNG

(11) **EP 1 469 305 A1**
(43) Veröffentlichungstag der Anmeldung: **20.10.2004**
(21) Anmeldenummer: 04003735.0
(22) Anmeldetag: 19.02.2004
(51) Int. Cl.: G01N 23/207, G01N 23/20

(54) **Röntgendiffraktometer zum Screening einer Kobinatiorischen Bibliothek**

(30) Priorität: 17.04.2003 DE 10317678
(71) Anmelder: Bruker AXS GmbH, 76187 Karlsruhe (DE)
(72) Erfinder: Brügemann, Lutz, 76448 Durmersheim (DE); Kern, Arnt, 76744 Büchelberg (DE)
(74) Vertreter: KOHLER SCHMID + PARTNER

(57) **Zusammenfassung**

Ein Röntgen-optisches System zum kombinatorischen Screening mit einer Vielzahl von Proben, die als Probenbibliothek (3;22) auf einer ebenen Platte (8;23) angeordnet sind, sowie mit einer Röntgenquelle (1), von der Röntgenstrahlung (2) auf eine zu untersuchende Probe geführt wird, und mit einem Röntgen-Detektor (7) zum Empfang von an der Probe gebeugter oder gestreuter Strahlung (6), enthält einen Probenträger, mittels dessen die ebene Platte (8;23) in ihrer xy-Ebene sowie senkrecht dazu längs einer z-Richtung verschoben und sowohl um eine erste Achse (9) parallel zur z-Richtung als auch um eine zweite durch die xy-Ebene verlaufende Achse (10) verdreht werden kann. Dadurch können die Proben einer Probenbibliothek in rascher Folge vermessen werden, wobei eine große Vielfalt von Arten der Röntgenanalyse auf die Proben angewandt werden kann.

## Beschreibung

Die Erfindung betrifft ein Röntgen-optisches System zum kombinatorischen Screening einer Vielzahl von Proben, die als Probenbibliothek auf einer ebenen Platte angeordnet sind, sowie einer Röntgenquelle, von der Röntgenstrahlung auf die zu untersuchende Probe geführt wird, und einem Röntgendetektor zum Nachweis von der an der Probe gebeugten oder gestreuten Strahlung, wobei ein Probenträger vorgesehen ist, mittels dessen die ebene Platte in ihrer xy-Ebene sowie senkrecht dazu längs einer z-Richtung verschiebbar ist.

Ein derartiges röntgen-optisches System ist beispielsweise aus der Firmenschrift "DIFFRACTION SOLUTIONS for Combinatorical Screening - D8 DISCOVER with GADDS", Bruker AXS Inc., 5465 East Cheryl Parkway, Madison, WI 53711, USA, 2000, insbesondere Seiten 4-5, bekannt geworden.

Methoden der Röntgenanalyse werden in der Materialforschung und der chemischen Analytik in vielfältiger Weise eingesetzt, um Informationen über den Aufbau und/oder die Zusammensetzung von vorzugsweise kristallinen Proben zu erhalten. Dazu wird ein Röntgenstrahl von einer Röntgenquelle auf die Probe gelenkt, und an der Probe gebeugtes (gestreutes oder charakteristisches, emittiertes) Röntgenlicht wird in einem Röntgendetektor registriert. Aus der räumlichen Lage und/oder aus der Intensität des gebeugten Röntgenlichtes wird auf die Wechselwirkung des eingestrahlten Röntgenlichts mit der Probe und damit auf Eigenschaften der Probe rückgeschlossen.

Um bei einer großen Zahl von Proben die Röntgenanalysen zu beschleunigen, werden bei einem in der obigen Firmenschrift der Bruker AXS Inc. beschriebenen Gerät Probenbibliotheken eingesetzt. Eine Probenbibliothek besteht typischerweise aus einer ebenen Platte mit einer Vielzahl von regelmäßig angeordneten Vertiefungen oder Halterungen, in denen jeweils eine einzelne Probe platziert werden kann. Um für eine Röntgenanalyse schnell von einer Probe zur nächsten wechseln zu können, ist die Probenbibliothek mittels eines Probenträgers in der Ebene der ebenen Platte (xy-Ebene) und senkrecht zur Ebene der ebenen Platte (z-Richtung) translatorisch verfahrbar. Das in der Firmenschrift von Bruker AXS Inc. dargestellte Gerät erlaubt ein Verfahren von Röntgenquelle und Röntgendetektor auf einer Kreisbahn um den Probenträger zur Durchführung von theta-2theta Messungen.

Nachteilig bei diesem Gerät ist es, dass die Proben bezüglich der Lage von Röntgenquelle und Röntgen-Detektors zwar positioniert, nicht aber frei orientiert werden können. Dadurch ist die Art der Röntgenanalysen mit den einzelnen Proben einer Probenbibliothek sehr begrenzt.

Aufgabe der vorliegenden Erfindung ist es demgegenüber, ein röntgen-optisches System vorzustellen, mit dem die Proben einer Probenbibliothek in rascher Folge vermessen werden können, und bei dem eine große Vielfalt von Arten der Röntgenanalyse auf die Proben angewandt werden können.

Diese Aufgabe wird auf überraschend einfache, aber wirkungsvolle Weise bei einem Röntgen-optisches System der eingangs vorgestellten Art dadurch gelöst, dass der Probenträger so gestaltet ist, dass er die ebene Platte sowohl um eine erste Achse parallel zur z-Richtung als auch um eine zweite durch die xy-Ebene verlaufende Achse verdrehen kann.

Durch die Drehbarkeit der ebenen Platte um zwei nicht-parallele Achsen können die einzelnen Proben bezüglich der räumlichen Position von Röntgen-Quelle und Röntgendetektor im Raum frei orientiert werden. Dadurch ist gegenüber dem Stand der Technik eine viel größere Zahl von verschiedenartigen Methoden der Röntgenanalyse durchführbar.

Im Falle von einkristallinen Proben können insbesondere die kristallografischen Ebenen des Einkristalls ausgerichtet werden. Dadurch ist es möglich, bestimmte Beugungsreflexe trotz einer zufälligen Orientierung des Einkristalls in der Probenbibliothek einer Detektion zugänglich zu machen. Die räumliche Orientierung einer Probe kann erfindungsgemäß auch während einer Messung verändert werden, etwa um die Messung von Polfiguren zu ermöglichen.

Besonders bevorzugt ist eine Ausführungsform des erfindungsgemäßen Röntgen-optischen Systems, bei dem der Probenträger so gestaltet ist, dass sich die erste und die zweite Achse schneiden. Dadurch wird der nötige Verschwenkbereich des Probenträgers bei der Orientierung und der Platzbedarf seiner zugehörigen Orientierungsmechanik verringert.

Besonders bevorzugt ist eine Weiterbildung dieser Ausführungsform, die vorsieht, dass die ebene Platte so verschiebbar ist, dass jede Probe der Probenbibliothek in den Schnittpunkt der ersten und der zweiten Achse verschoben werden kann. Befindet sich eine Probe am Schnittpunkt der ersten und zweiten Achse, so hat die Orientierung der Probe durch Drehung um die erste oder die zweite Achse keine Translationsbewegung der Probe zur Folge. Orientierung und Position der Probe sind dann direkt und unabhängig voneinander einstellbar. Dabei ist der Schnittpunkt der ersten und zweiten Achse durch die Röntgenquelle beleuchtbar und vom Detektor abtastbar, also als Messposition der Probe nutzbar.

Vorteilhaft ist weiterhin eine Ausführungsform des erfindungsgemäßen Systems, bei der die Quelle und/oder der Detektor oder die ebene Platte um eine dritte Achse drehbar angeordnet ist (sind). Dies gibt eine zusätzliche Möglichkeit zur Orientierung der Proben, wodurch zusätzliche Methoden der Röntgenanalyse zugänglich werden und Methoden der Röntgenanalyse in der Durchführung vereinfacht oder flexibler werden.

Eine vorteilhafte Weiterbildung dieser Ausführungsform sieht vor, dass die Richtungen der ersten, zweiten und dritten Achse im Wesentlichen orthogonal sind. Dadurch wird die Orientierung der ebenen Platte bzw. der Proben vereinfacht.

Bevorzugt wird weiterhin eine Ausführungsform, bei der die Quelle und der Detektor derart bewegbar sind, dass sie sowohl auf einer Seite der ebenen Platte als auch auf gegenüberliegenden Seiten der ebenen Platte angeordnet werden können. Das Röntgen-optische System ist dann grundsätzlich sowohl zur Durchführung von Transmission- als auch Reflektionsexperimenten geeignet.

Eine weitere vorteilhafte Ausführungsform sieht vor, dass die ebene Platte für Transmissionsmessungen Durchbrüche an den Probenpositionen aufweist. Die Durchbrüche reduzieren den Eintrag von Störstrahlung in den Detektor bei Transmissionsexperimenten.

Bei einer alternativen, vorteilhaften Ausführungsform ist vorgesehen, dass die ebene Platte für Reflexionsmessungen undurchlässig in Bezug auf die Röntgen-Strahlung gestaltet ist. Dies vermeidet den Eintrag von Störstrahlung durch Beugung oder Streuung von der den Proben abgewandten Seite der ebenen Platte.

ln den Rahmen der vorliegenden Erfindung fällt weiterhin ein Verfahren zum kombinatorischen Screening einer Vielzahl von Proben, die als Probenbibliothek auf einer ebenen Platte angeordnet sind, insbesondere zum Betrieb eines obigen erfindungsgemäßen Röntgen-optischen Systems, wobei die Proben nacheinander durch lineare Verschiebung entlang von x-, y- und z-Richtungen in eine Messposition gebracht werden, in der sie von einer Röntgenquelle mit Röntgenstrahlung beleuchtet werden, und aus der sie gestreute Röntgenstrahlung auf einen Röntgendetektor lenken, das dadurch gekennzeichnet ist, dass die Proben zur Optimierung der zum Detektor gestreuten Röntgenstrahlung um eine erste Achse senkrecht zur Plattenebene und/oder um eine zweite, in der Plattenebene verlaufende Achse verdreht werden, und dass in dieser jeweils optimierten Messposition eine Messung vorgenommen wird. Durch Anwendung dieser Methode können Beugungsmuster von Proben auch bei zunächst zufälliger Orientierung der Probe aus beliebigen Raumrichtungen, etwa entlang einer bestimmten Zonenachse einer einkristallinen Probe, aufgenommen werden. Die Orientierung einer Probe kann insbesondere auch in einer Weise erfolgen, dass ein besonders stark streuender Kristallit unter mehreren Kristalliten in der Probe für die Röntgenmessung orientiert wird. Dies ist insbesondere dann vorteilhaft, wenn die Probe nur wenige Kristallite umfasst und sich deshalb noch nicht wie eine Pulverprobe verhält.

Bevorzugt ist eine Variante des erfindungsgemäßen Verfahrens, bei der die Proben zur Optimierung der zum Detektor gestreuten Röntgen-Strahlung um ihre jeweilige Messposition herum in der Plattenebene bewegt werden. Bei Erreichen eines Intensitätsmaximums kann die Probenposition für eine Röntgenmessung fixiert oder justiert werden, wodurch ein verbessertes Signalzu-Untergrund-Verhältnis erreicht wird.

Ebenso vorteilhaft ist eine Verfahrensvariante, bei der die Proben in einer z-Richtung senkrecht zur Plattenebene linear bewegt werden.

Eine weitere, vorteilhafte Verfahrensvariante ist dadurch gekennzeichnet, dass zumindest ein Teil der Bewegungen der Proben längs der x-, y- oder z-Richtung und/oder um die erste oder die zweite Achse während der jeweiligen Messung oszillierend vorgenommen werden (="Wobbeln"). Leuchtet der Röntgenstrahl der Quelle nur einen Teil der Probe aus, so kann durch die Bewegung der Probe eine Mittelung über mehr Anteile der Probe erreicht werden. Der Detektor registriert dann eine bezüglich der Orientierungsverteilung der Kristallite in der Probe gemittelte Intensität. Eine zufällige, ungleichmäßige Verteilung des Probenmaterials (etwa an Gefäßrändern) ist dann für die Messung unkritisch.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine Ausführungsform des erfindungsgemäßen Röntgen-optischen Systems mit einem Strahlengang in Reflexion;
- Fig. 2: eine Ausführungsform des erfindungsgemäßen Röntgen-optischen Systems mit einem Strahlengang in Transmission.

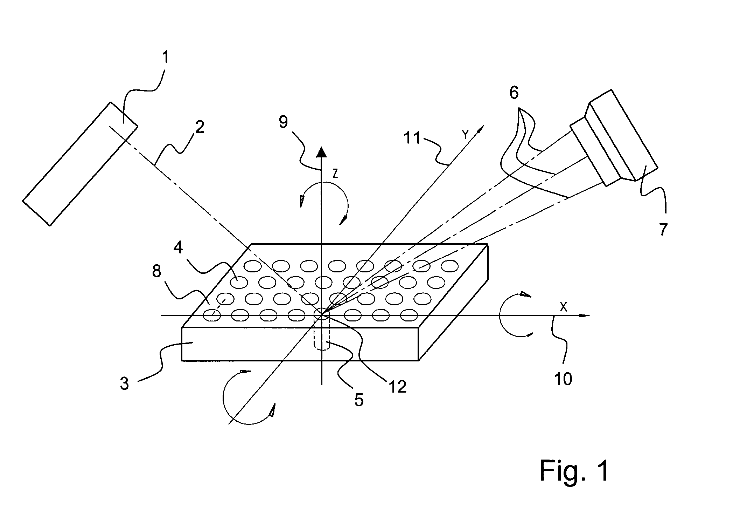

**Fig. 1** zeigt eine Ausführungsform eines erfindungsgemäßen Röntgen-optisches Systems. Eine Röntgenquelle 1 emittiert einen Röntgenstrahl 2, der in nicht dargestellter Weise durch eine geeignete Röntgenoptik parallelisiert oder fokussiert wird. ln einer Probenbibliothek 3 sind mehrere Vertiefungen 4 vorgesehen, in denen jeweils eine Probe aus zu untersuchendem Material platziert ist. Eine ausgewählte Vertiefung 5 der Vertiefungen 4 befindet sich im Röntgenstrahl 2. Das in der ausgewählten Vertiefung 5 befindliche Material wechselwirkt mit dem Röntgenstrahl 2 und erzeugt dadurch mehrere gebeugte Röntgenstrahlen 6. Die gebeugten Röntgenstrahlen 6 werden von einem Röntgendetektor 7 detektiert, der auf die ausgewählte Vertiefung 5 ausgerichtet ist. Der Röntgendetektor 7 ist als 2-dimensionaler Flächendetektor ausgebildet.

Die Probenbibliothek 3 ist an ihrer Oberseite, d.h. der der Röntgenquelle 1 und dem Röntgendetektor 7 zugewandten Seite als ebene Platte 8 ausgebildet. Die Öffnungen der Vertiefungen 4 befinden sich alle in der Plattenebene der ebenen Platte 8. Um anstatt der ausgewählten Vertiefung 5 eine andere der Vertiefungen 4 für eine Messung auszuwählen, kann die ebene Platte 8 und damit die Probenbibliothek 3 in x- und/oder y-Richtung, d.h. in der Plattenebene der ebenen Platte 8 verschoben werden. Die ebene Platte 8 kann außerdem in einer z-Richtung senkrecht zur Plattenebene verschoben werden, etwa um die konkrete Länge von aus den Vertiefungen 4 herausragenden Proben zu berücksichtigen. Eine Verschiebung der ebenen Platte in x-, y- oder z-Richtung kann außerdem erfolgen, um ein Intensitätsmaximum der gebeugten Röntgenstrahlung 6 aufzusuchen. Bei der gezeigten Ausführungsform erfolgt die translatorische Bewegung der ebenen Platte 8 mittels nicht dargestellten elektrischen Motoren über einen ebenfalls nicht dargestellten Probenträger, an dem die Probenbibliothek 3 befestigt ist.

Die Probenbibliothek 3 und damit auch die ebene Platte 8 sind außerdem um eine erste Achse 9, nämlich die z-Achse, und um eine zweite Achse 10, nämlich die x-Achse drehbar. Die Röntgenquelle 1 oder die Probenbibliothek 3 und der Röntgendetektor 7 sind um die y-Achse 11 drehbar, wobei der Abstand zur ausgewählten Vertiefung 5 konstant bleibt. Die Drehungen erfolgt mittels nicht gezeigter elektrischer Schrittmotoren. Die drei Achsen 9, 10, 11 verlaufen untereinander orthogonal und schneiden sich in einem Schnittpunkt 12. An diesem Schnittpunkt 12 befindet sich auch die ausgewählte Vertiefung 5 und damit die aktuell zu vermessende Probe.

Soll die aktuell zu vermessende Probe in besonderer Weise bezüglich des einfallenden Röntgenstrahls 2 oder bezüglich der Position des Detektors 7 orientiert werden, kann dies durch eine Verkippung der Probenbibliothek 3 um eine oder mehrere der drei Achsen 9, 10, 11 erfolgen. Für eine freie Orientierung der Probenbibliothek 3 ist eine Verdrehung um die erste Achse 9 und/oder die zweite Achse 10 ausreichend. Eine Drehung um die dritte Achse 11 kann aber den Orientierungsvorgang vereinfachen. Durch die Drehung der Probenbibliothek 3 wird die Position der ausgewählten Vertiefung 5 im Raum nicht verändert, d.h. die ausgewählte Vertiefung 5 verbleibt im einfallenden Röntgenstrahl 2 und im Detektionsbereich des Detektors 7. Die Orientierung der Probe in der ausgewählten Vertiefung 5 ist damit unabhängig von deren Position im Raum und direkt einstellbar. Bei einer bestimmten Orientierung der Probenbibliothek 3, d.h. einer bestimmten Ausrichtung der Ebenennormalen der Plattenebene der ebenen Platte 8, kann auch umgekehrt die Position der Probenbibliothek 3 (und damit die ausgewählte Vertiefung 5) unabhängig von der Orientierung der Probenbibliothek direkt gewählt werden.

Damit diese Unabhängigkeit auch bei der Auswahl anderer Vertiefungen 4 erhalten bleibt, ist die Bewegungsmechanik des Probenträgers, an dem die Probenbibliothek 3 befestigt ist, so ausgelegt, dass die Position des Schnittpunktes 12, also des Schnittpunkts der Drehachsen 9, 10 und 11, im Raum absolut ortsfest ist. Die translatorischen Bewegungen der Probenbibliothek in x-, y- und z-Richtung erfolgen relativ zu diesem Schnittpunkt 12. Beispielsweise kann der Probenträger direkt an einer Drehmechanik der Achsen 9, 10, 11 angelenkt sein, während die ebene Platte 8 in die drei Richtungen x, y, z relativ zum Probenträger verschoben wird. Die Abhängigkeit (Reihenfolge) der Bewegungskomponenten ist dann etwa X-Y auf Z, über die erste Achse 9, über die zweite Achse 10.

Durch die freie Orientierung der zu vermessenden Probe vor und während einer Messung stehen dem Anwender des erfindungsgemäßen Röntgen-optischen Systems unzählige verschiedene Methoden der Röntgenanalyse offen, wobei ein schneller Probenwechsel zwischen Proben einer Probenbibliothek 3 einfach möglich ist. Die freie Orientierbarkeit der Proben kann wie auch die Translationsbewegung zur lntensitätssteigerung durch Ausrichten der Probe genutzt werden. Eine hohe Intensität wird insbesondere dann erreicht, wenn überdurchschnittlich große Kristallite in einer Probe die Bragg-Bedingung erfüllen.

Wurde ein Maximum der Intensität eines gebeugten Röntgenstrahls 6 bei einer Röntgenmessung aufgefunden, so ist eine nicht unerhebliche Menge von Probenmaterial im einfallenden Röntgenstrahl 2 angeordnet. Eine solche nicht unerhebliche Menge von Probenmaterial im Röntgenstrahl 2 anzuordnen ist bei einer Probe relativ schwierig, die nur wenige Mikrokristallite umfasst, etwa infolge eines geringen Titervolumens vor einem Auskristallisierungsprozess. Der einfallende Röntgenstrahl 2 erzeugt im Probenmaterial ein Röntgenfloureszenzsignal, d.h. für das Probenmaterial charakteristische Röntgenstrahlung. Diese kann zur Elementaranalyse herangezogen werden. Vorteilhafter Weise kann daher auch ein energiedispersiver Röntgendetektor im erfindungsgemäßen Röntgen-optischen System zusätzlich zum ortsauflösenden Röntgendetektor 7 vorgesehen sein. Dann ist parallel zur diffraktometrischen Analyse jeder Probe auch eine parallele, energiedispersive Elementanalyse möglich. Ein energiedispersiver Röntgendetektor sollte möglichst nahe an der bestrahlten Probe und dieser zugewandt angeordnet sein.

In der Ausführungsform von Fig. 1 sind die Röntgenquelle 1 und der Detektor 7 oberhalb der Plattenebene der ebenen Platte 8 angeordnet. Dadurch ist diese Ausführungsform zur Durchführung von Röntgenexperimenten in Reflexion geeignet.

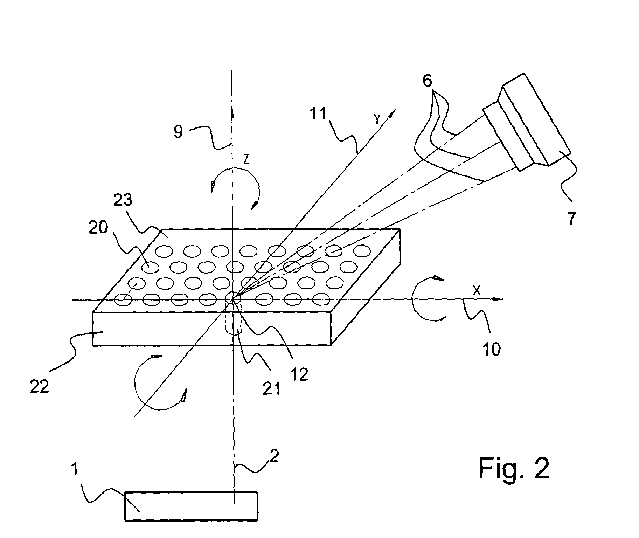

In **Fig. 2** ist eine weitere Ausführungsform eines erfindungsgemäßen Röntgen-optischen Systems dargestellt. Von einer Röntgenquelle 1 wird ein Röntgenstrahl 2 emittiert. Dieser läuft auf eine Probenbibliothek 22 zu. Diese weist eine Mehrzahl von Durchbrüchen (Durchbruchsöffnungen) 20 auf, in denen jeweils zu untersuchende Proben angeordnet sind. Der Röntgenstrahl 2 trifft auf eine Probe in einem der Durchbrüche 20, nämlich in dem ausgewählten Durchbruch 21. Durch Wechselwirkung des Röntgenstrahls 2 mit der Probe im ausgewählten Durchbruch 21 entstehen mehrere gebeugte Röntgenstrahlen 6, welche von einem Detektor 7 registriert werden. Der Detektor 7 ist als zweidimensionaler Flächendetektor ausgebildet.

Die Probenbibliothek 22 ist an ihrer Oberseite (und auch an ihrer Unterseite) als ebene Platte 23 ausgebildet. In der Ausführungsform von Fig. 2 ist die Röntgenquelle 1 unterhalb der Plattenebene der ebenen Platte 23 angeordnet, während der Detektor 7 oberhalb der Plattenebene der ebenen Platte 23 angeordnet ist. Dadurch ist diese Ausführungsform zur Durchführung von Transmissionsexperimenten geeignet. Vorteilhafter Weise sind die Röntgenquelle 1 und/oder der Detektor 7 von unterhalb nach oberhalb der Plattenebene der ebenen Platte 23 schwenkbar und zurück.

Die Probenbibliothek 22 ist in gleicher Weise wie die Probenbibliothek 3 in der in Fig. 1 gezeigten Ausführungsform in drei Raumrichtungen x, y, z translatorisch verschiebbar und um eine erste Achse 9, eine zweite Achse 10 und eine dritte Achse 11 rotierbar. Im Schnittpunkt 12 der drei Achsen 9, 10, 11 befindet sich die Messposition der Proben.

## Patentansprüche

1. Röntgen-optisches System zum kombinatorischen Screening mit einer Vielzahl von Proben, die als Probenbibliothek (3; 22) auf einer ebenen Platte (8; 23) angeordnet sind, sowie mit einer Röntgen-Quelle (1), von der Röntgen-Strahlung (2) auf eine zu untersuchende Probe geführt wird, und einem Röntgen-Detektor (7) zum Empfang von an der Probe gebeugter oder gestreuter Strahlung (6), wobei ein Probenträger vorgesehen ist, mittels dessen die ebene Platte (8; 23) in ihrer xy-Ebene sowie senkrecht dazu längs einer z-Richtung verschiebbar ist,
**dadurch gekennzeichnet,**
**dass** der Probenträger so gestaltet ist, dass er die ebene Platte (8; 23) sowohl um eine erste Achse (9) parallel zur z-Richtung als auch um eine zweite durch die xy-Ebene verlaufende Achse (10) verdrehen kann.

2. System nach Anspruch 1, **dadurch gekennzeichnet, dass** der Probenträger so gestaltet ist, dass sich die erste und die zweite Achse (9, 10) schneiden.

3. System nach Anspruch 2, **dadurch gekennzeichnet, dass** die ebene Platte (8; 23) so verschiebbar ist, dass jede Probe der Probenbibliothek (3; 22) in den Schnittpunkt (12) der ersten und der zweiten Achse (9, 10) verschoben werden kann.

4. System nach einem der vorhergehenden Ansprüche, **dadurch gekennzeichnet, dass** die Quelle (1) und/oder der Detektor (7) oder die ebene Platte (8; 23) um eine dritte Achse (11) drehbar angeordnet ist (sind).

5. System nach Anspruch 4, **dadurch gekennzeichnet, dass** die Richtungen der ersten, zweiten und dritten Achse (9, 10, 11) im Wesentlichen orthogonal sind.

6. System nach einem der vorhergehenden Ansprüche, **dadurch gekennzeichnet, dass** die Quelle (1) und der Detektor (7) derart bewegbar sind, dass sie sowohl auf einer Seite der ebenen Platte (8; 23) als auch auf gegenüberliegenden Seiten der ebenen Platte (8; 23) angeordnet werden können.

7. System nach einem der vorhergehenden Ansprüche, **dadurch gekennzeichnet, dass** die ebene Platte (23) für Transmissionsmessungen Durchbrüche (20) an den Probenpositionen aufweist.

8. System nach einem der Ansprüche 1 bis 6, **dadurch gekennzeichnet, dass** die ebene Platte (8) für Reflexionsmessungen undurchlässig in Bezug auf die Röntgenstrahlung gestaltet ist.

9. Verfahren zum kombinatorischen Screening einer Vielzahl von Proben, die als Probenbibliothek (3; 22) auf einer ebenen Platte (8; 23) angeordnet sind, insbesondere zum Betrieb eines Röntgen-optischen Systems nach einem der vorhergehenden Ansprüche, wobei die Proben nacheinander durch lineare Verschiebung entlang von x-, y- und z-Richtungen in eine Messposition gebracht werden, in der sie von einer Röntgenquelle (1) mit Röntgenstrahlung (2) beleuchtet werden, und aus der sie gestreute Röntgenstrahlung (6) auf einen Röntgendetektor (7) lenken,
**dadurch gekennzeichnet,**
**dass** die Proben zur Optimierung der zum Detektor (7) gestreuten Röntgenstrahlung (6) um eine erste Achse (9) senkrecht zur Plattenebene und/oder um eine zweite, in der Plattenebene verlaufende Achse (10) verdreht werden, und dass in dieser jeweils optimierten Messposition eine Messung vorgenommen wird.

10. Verfahren nach Anspruch 9, **dadurch gekennzeichnet, dass** die Proben zur Optimierung der zum Detektor (7) gestreuten Röntgenstrahlung (6) um ihre jeweilige Messposition herum in der Plattenebene bewegt werden.

11. Verfahren nach Anspruch 9 oder 10, **dadurch gekennzeichnet, dass** die Proben in einer z-Richtung senkrecht zur Plattenebene linear bewegt werden.

12. Verfahren nach einem der Ansprüche 9 bis 11, **dadurch gekennzeichnet, dass** zumindest ein Teil der Bewegungen der Proben längs der x-, y- oder z-Richtung und/oder um die erste oder die zweite Achse (9, 10) während der jeweiligen Messung oszillierend vorgenommen werden (="Wobbeln").
